# EUROPEAN PATENT SPECIFICATION

(11) **EP 3 860 173 B1**
(45) Date of publication and mention of the grant of the patent: **13.03.2024**
(21) Application number: 18935560.5
(22) Date of filing: 25.09.2018
(51) Int. Cl.: H04W 4/90, H04W 88/08, H04W 24/02, H04W 92/12, H04W 76/11

(54) **COMMUNICATION DEVICE AND WIRELESS COMMUNICATION SYSTEM**
KOMMUNIKATIONSVORRICHTUNG UND DRAHTLOSKOMMUNIKATIONSSYSTEM
DISPOSITIF DE COMMUNICATION ET SYSTÈME DE COMMUNICATION SANS FIL

(43) Date of publication of application: 04.08.2021
(73) Proprietor: FUJITSU LIMITED, Kanagawa 211-8588 (JP)
(72) Inventor: HIRATA, Akira, Kawasaki-shi, Kanagawa 211-8588 (JP)
(74) Representative: Haseltine Lake Kempner LLP
(86) International application number: PCT/JP2018/035454
(87) International publication number: WO 2020/065725

(56) References cited:
- WO-A1-2012/108358
- JP-A- 2014 146 863
- JP-A- 2014 158 229
- US-A1- 2010 075 627
- US-A1- 2016 286 385
- US-A1- 2017 201 871
- NOKIA ET AL: "(TP for NR BL CR for TS 38.473) PWS over F1", 3GPP DRAFT; R3-182911 PWS_TP38.473, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Busan, South Korea; 20180521 - 20180525 20 May 2018 (2018-05-20), XP051445409, Retrieved from the Internet: URL:http://www.3gpp.org/ftp/Meetings%5F3GP P%5FSYNC/RAN3/Docs/ [retrieved on 2018-05-20]

## Description

### FIELD

The embodiments discussed herein are related to a communication apparatus and a radio communication system.

### BACKGROUND

At present, in the 3rd Generation Partnership Project (3GPP) which is a standardization organization, an element technology of a radio access network that satisfies demand conditions of the fifth generation mobile communication system (5G) has been studied for early introduction of the 5G.

In the 5G mobile network, concentration and distribution of processing in a base station have been studied in order to cope with an increase in message traffic. For example, central unit (CU) and distributed unit (DU) split has been studied as a method of concentrating and distributing the processing in the base station. For example, a next generation Node B (gNB) that is a logical base station is constituted by one combination, a N to 1 combination, or N combinations of the CU and the DU. In the CU and DU split, processing of messages is split for each node in a hierarchy of protocols, a higher-level protocol is processed by the CU, and a lower-level protocol is processed by the DU.

In the gNB, when a Public Warning System (PWS) message such as a Write-Replace Warning Request is received from Access and Mobility Management Function (AMF) of a higher-level apparatus, information for identifying the PWS messages is not notified from the CU to the DU. For example, when the Write-Replace Warning Request is received, the CU aggregates pieces of information into one piece of information such that the DU transmits the message with no change to a radio section. When a PWS Cancel Request is received, the CU deletes the information for identifying the PWS message from the information to be notified to the DU.

US 2010/075627 A1 discloses a method, a device, and a system for sending and receiving messages. The method for sending messages includes receiving, by a Mobility Management Entity (MME), an Earthquake and Tsunami Warning System (ETWS) message; setting an information change identifier if the received ETWS message is different from the ETWS message stored by the MME; and sending the received ETWS message and the information change identifier.

US 2016/286385 A1 discloses a method and apparatus for monitoring UE reachability in a wireless communication system. The method may include receiving, by a Mobility Management Entity, a monitoring request message for UE reachability including a maximum response time from a Home Subscriber Server, detecting, by the MME, the UE reachability if it is expected that paging is able to be transmitted to UE when extended Discontinuous Reception is applied to the UE, and sending, by the MME, a UE, reachability notification to a Service Capability Exposure Function before a next paging occasion of the UE. The maximum response time may indicate a time during which the UE maintains a reachable state so that downlink data is reliably delivered to the UE and an occasion when the UE reachability notification is transmitted may be determined by taking into consideration the maximum response time.

US 2017/201871 A1 discloses a method for cancelling a group messaging in a wireless communication system and an apparatus for the same. Particularly, a method for cancelling a group messaging performed by a network node in a wireless communication system may include receiving a group messaging cancellation request message that includes a group messaging identifier of a group messaging requested to be cancelled and cancellation indication information and stopping a transmission of a group messaging that corresponds to the group messaging identifier and transmitting the group messaging identifier to a user equipment.

NOKIA ET AL: R3-182911 discloses a discussion and decision on (TP for NR BL CR for TS 38.473) PWS over F1. Two alternatives were raised to support PWS over F1 at the RAN3#99bis, use dedicated procedure or one procedure (e.g. gNB-CU Configuration Update). The discussion proposed to introduce dedicated procedures for PWS over F1, and agree on the TP in the Annex.

### SUMMARY

### Technical Problem

Incidentally, when the gNB receives a plurality of PWS messages, it is important that the DU does not transmit information on duplicate PWS messages to the radio section or stops transmission of information on a low-priority PWS message to the radio section according to a resource of the radio section. When an instruction to stop a part of the plurality of PWS messages being received by the gNB is given, it is important that the DU specifies the PWS message to be stopped.

However, when the DU transmits one piece of information aggregated by the CU with no change to the radio section, it is difficult for the DU to perform duplication determination and priority determination of the plurality of PWS messages. It is difficult for the DU to specify the PWS message to be stopped without the information for identifying the PWS message.

An object of a disclosed technology is to provide a communication apparatus and a radio communication system that are capable of identifying and processing a plurality of PWS messages.

### Solution to Problem

The invention is defined by a first communication apparatus according to claim 1 and a second communication apparatus according to claim 2. Further embodiments are defined by the dependent claims.

### Effects of Invention

According to the aspect of the communication apparatus disclosed in the present application, there is an effect that the plurality of PWS messages may be identified and processed.

### BRIEF DESCRIPTION OF DRAWINGS

FIG. 1 illustrates a configuration example of a radio communication system according to a first embodiment;
FIG. 2 is a diagram for describing an example of processing of a PWS message in the embodiment;
FIGs. 3A to 3D illustrate a diagram for describing specific examples of the processing of the PWS message in the radio communication system according to the embodiment;
FIG. 4 illustrates an example of a functional configuration of a gNE according to the embodiment;
FIG. 5 illustrates an example of a data configuration of priority information in the embodiment;
FIG. 6 is a diagram for describing a specific example of an operation of a CU in the embodiment;
FIG. 7 is a diagram for describing a specific example of an operation of the gNE in the embodiment;
FIG. 8 illustrates an example of a data configuration of an RRC transmission PWS list in the embodiment;
FIG. 9 is a sequence diagram for describing an example of an operation of the radio communication system in the embodiment;
FIG. 10 is a flowchart for describing an example of an operation of a DU in the embodiment;
FIG. 11 is a flowchart for describing an example of the operation of the DU in the embodiment; and

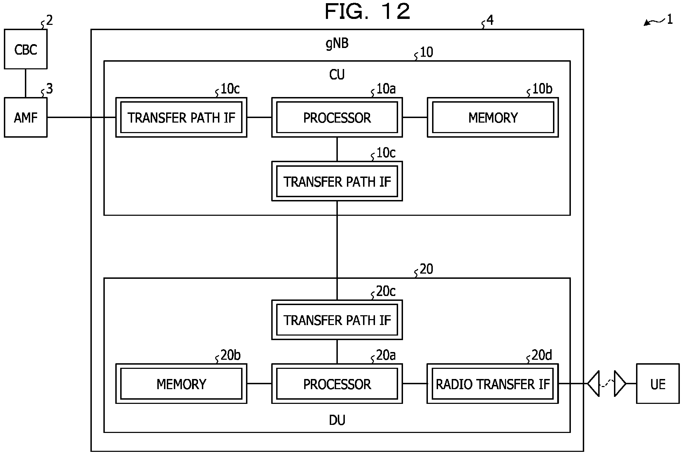

FIG. 12 illustrates a hardware configuration example of the gNE.

### DESCRIPTION OF EMBODIMENT(S)

Hereinafter, embodiments of a communication apparatus and a radio communication system disclosed in the present application are described in detail with reference to the drawings. The following embodiments are not intended to limit the disclosed technology. Configurations having equivalent functions in the embodiments are denoted by the same reference numerals, and redundant description thereof will be omitted.

### EMBODIMENTS

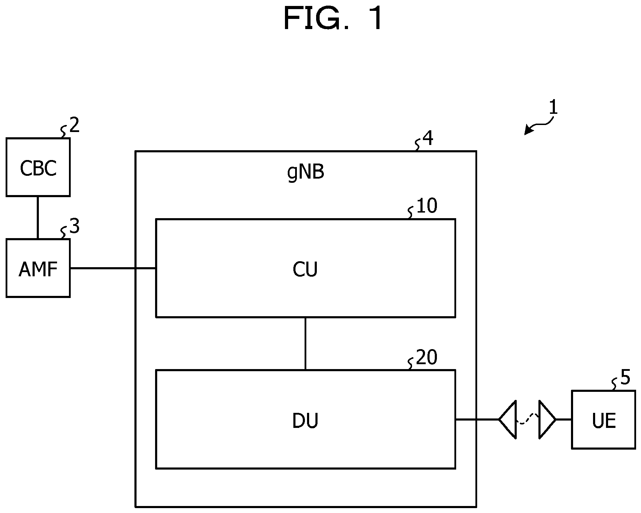

FIG. 1 illustrates a configuration example of a radio communication system 1 according to an embodiment. The radio communication system 1 illustrated in FIG. 1 includes a Cell Broadcast Center (CBC) 2, an AMF 3, a gNB 4, and user equipment (UE) 5. The CBC 2 is a broadcast distribution apparatus that distributes report information such as an Earthquake Early Warning, receives information provided by an information distribution source such as the Weather Management Agency, creates a message, and decides a distribution destination. The AMF 3 controls mobility management, and transmits a PWS message to the gNB 4 in the area.

The gNB 4 is a logical radio base station, and includes a CU 10 and a DU 20. The CU 10 processes a higher-level protocol of a message received from the AMF 3 or the DU 20. In the present embodiment, the CU 10 processes Radio Resource Control (RRC) and Packet Data Convergence Protocol (PDCP). The DU 20 processes a lower-level protocol of a message received from the CU 10 or the UE 5. In the present embodiment, the DU 20 processes Radio Link Control (RLC), Medium Access Control (MAC), and PHYsical layer (PHY). An interface between the CU 10 and the DU 20 is referred to as F1. An interface between the AMF 3 and the CU 10 is referred to as N2.

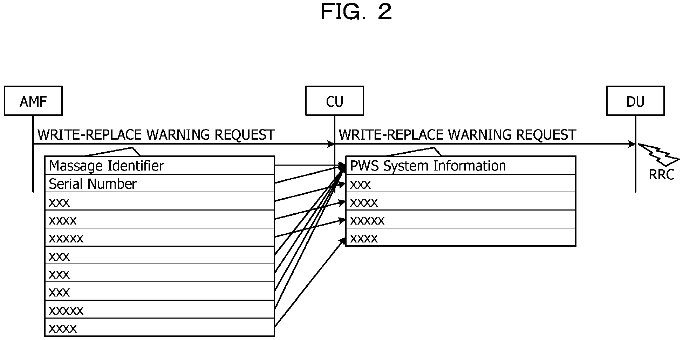

FIG. 2 is a diagram for describing an example of processing of the PWS message in the embodiment. In FIG. 2, a Write-Replace Warning Request is illustrated as the PWS message. A Write-Replace Warning Response, a PWS Cancel Request, a PWS Cancel Response, a PWS Restart Indication, a PWS Failure Indication, and the like are used as other PWS messages.

As illustrated in FIG. 2, in the gNB 4, the CU 10 aggregates pieces of information of the RRC level which include a Message Identifier and a Serial Number among information elements of the Write-Replace Warning Request received from the AMF 3 to PWS System Information. The DU 20 distributes the message to the UE 5 by transmitting the PWS System Information received from the DU 20 with no change to a radio section (see NPL 2).

Here, the Message Identifier is information indicating a message type, and the Serial Number is identification information for identifying a message among messages of the same type. For example, the PWS message may be identified by a combination of the Message Identifier and the Serial Number.

On the other hand, in Long-Term Evolution (LTE) of a 4G standard, a radio base station (eNB) receives a plurality of PWS messages from the Mobility Management Entity (MME) in some cases. For example, an eNB in which S1-Flex coupled in a full mesh is implemented with a plurality of MMEs receives an identical PWS message from different MMEs in some cases. In some cases, the identical PWS message is transmitted from an identical MME by multiple times in order to suppress transmission and reception failures.

When a plurality of identical Write-Replace Warning Requests is received in duplicate, the eNB performs duplication determination by using the combination of the Message Identifier and the Serial Number, and does not transmit the second and subsequent identical messages to the radio section.

When a plurality of different Write-Replace Warning Requests is received, the eNB determines priorities by using the combination of the Message Identifier and the Serial Number, and transmits the messages to the radio section in descending order of priority according to a resource of the radio section.

In contrast, in the radio communication system 1 according to the embodiment, when the gNB 4 receives the plurality of Write-Replace Warning Requests, in the processing illustrated in FIG. 2, since the DU 20 does not know the Message Identifier and the Serial Number, it is difficult to perform the duplication determination and importance determination.

In the radio communication system 1 according to the embodiment, when the gNB 4 receives a PWS Cancel Request for giving an instruction to stop a part of the plurality of Write-Replace Warning Requests while receiving the plurality of Write-Replace Warning Requests, it is important that the DU 20 specifies the PWS message to be stopped.

Thus, in the radio communication system 1 according to the embodiment, as will be described below, the CU 10 includes a PWS identifier for identifying the PWS message such as the Message Identifier or the Serial Number in the PWS message to be transmitted to the DU 20. Accordingly, in the radio communication system 1 according to the embodiment, for example, the DU 20 performs the duplication determination of the plurality of received Write-Replace Warning Requests, and may suppress transmission of an unnecessary message to the radio section. For example, the DU 20 may specify the PWS message to be stopped by the received PWS Cancel Request.

The CU 10 includes an information element (Priority Indicator) for easily determining the priority in the PWS message to be transmitted to the DU 20. Accordingly, for example, the DU 20 determines the priorities of the plurality of received Write-Replace Warning Requests, and may reliably transmit a high-priority message according to the resource of the radio section.

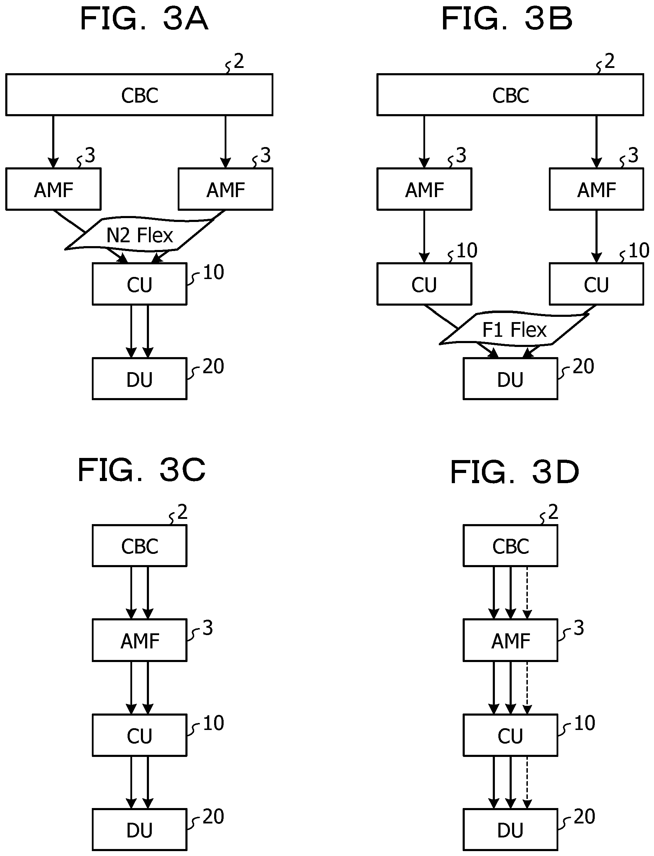

FIG. 3 (i.e. FIGs. 3A to 3D) is a diagram for describing specific examples of processing of the PWS message in the radio communication system 1 according to the embodiment. As illustrated in FIG. 3A, the CU 10 in which N2-Flex is implemented with the AMFs 3 receives the identical PWS messages in duplicate from different AMFs 3 in some cases. As illustrated in FIG. 3B, the DU 20 in which F1-Flex is implemented with the CUs 10 receives the identical PWS message in duplicate from different CUs 10 in some cases. In such a case, the DU 20 may perform the duplication determination by using the PWS identifier.

As illustrated in FIG. 3C, when the plurality of different PWS messages is simultaneously received, the DU 20 may perform the priority determination by using the PWS identifier and the Priority Indicator.

FIG. 3D illustrates a case where the DU 20 further receives the PWS Cancel Request for giving the instruction to stop the transmission of a part of the PWS messages to the radio section while simultaneously receiving the plurality of different PWS messages (Write-Replace Warning Requests). In this case, the DU 20 specifies the message to be stopped by using the PWS identifier included in the PWS Cancel Request received from the CU 10, and may stop the transmission of the message to the radio section.

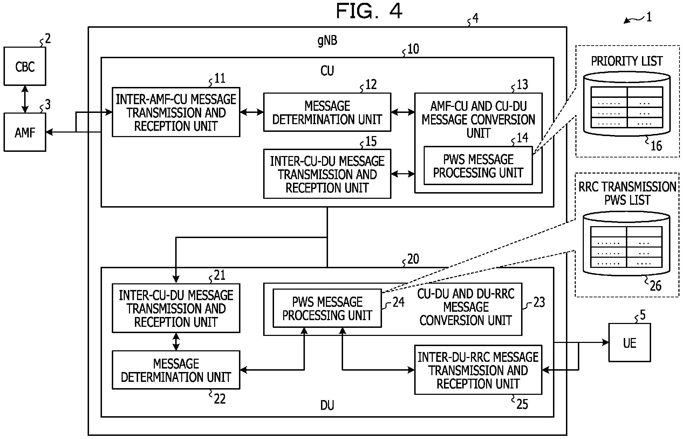

Next, FIG. 4 illustrates an example of a functional configuration of the gNB 4 according to the embodiment. As illustrated in FIG. 4, the gNB 4 includes the CU 10 and the DU 20.

The CU 10 includes an inter-AMF-CU message transmission and reception unit 11, a message determination unit 12, an AMF-CU and CU-DU message conversion unit 13, and an inter-CU-DU message transmission and reception unit 15. The CU 10 stores a priority list 16 in a memory.

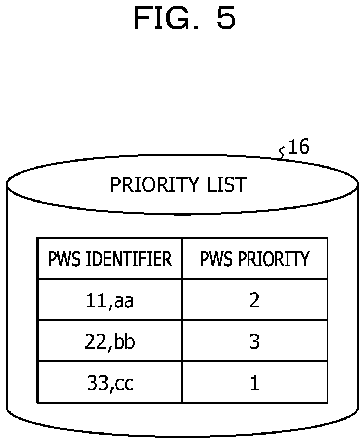

FIG. 5 illustrates an example of a data configuration of the priority list 16. As illustrated in FIG. 5, the priority list 16 is information indicating a correspondence between the PWS identifier and the priority (PWS priority). FIG. 5 illustrates that, for example, a priority of a PWS message with a PWS identifier "11, aa" is "2". In the example illustrated in FIG. 5, the PWS identifier is represented by the combination of the Message Identifier and the Serial Number of the PWS message. For example, the PWS identifier "11, aa" indicates that the Message Identifier is "11" and the Serial Number is "aa".

The PWS identifier is not limited to the combination of the Message Identifier and the Serial Number of the PWS message, and may be, for example, a hash value as long as the PWS message may be identified. The priority will be described later.

Referring back to FIG. 4, the description will be continued. The inter-AMF-CU message transmission and reception unit 11 controls communication between the CU 10 and the AMF 3 of a higher-level network. The message determination unit 12 determines the processing corresponding to the message type for each PWS message received from the AMF 3, and delivers the PWS message to be transmitted to the DU 30 to the AMF-CU and CU-DU message conversion unit 13.

The AMF-CU and CU-DU message conversion unit 13 performs the processing corresponding to the message type on the message received from the message determination unit 12. The AMF-CU and CU-DU message conversion unit 13 includes a PWS message processing unit 14.

The PWS message processing unit 14 functions as an addition unit. For example, the PWS message processing unit 14 adds the PWS identifier that is the identification information for identifying the PWS message to the processed PWS message obtained by performing processing corresponding to the message type of the PWS message on the PWS message that is report information received from a higher-level network.

The PWS message processing unit 14 further adds, to the processed PWS message, predetermined priority information for each PWS message which indicates a priority order in which the DU 20 coupled to a radio link transmits the message by using the radio link.

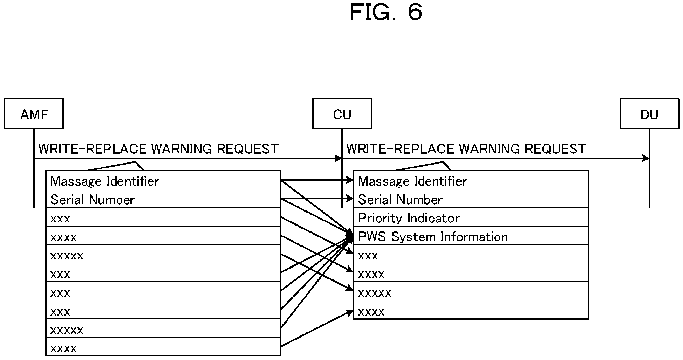

FIG. 6 is a diagram for describing a specific example of an operation of the CU 10 in the embodiment. FIG. 6 illustrates a case where the CU 10 receives the Write-Replace Warning Request as the PWS message from the AMF 3. As illustrated in FIG. 6, in the CU 10, the AMF-CU and CU-DU message conversion unit 13 performs processing specialized for the Write-Replace Warning Request and creates the processed PWS message. For example, the AMF-CU and CU-DU message conversion unit 13 aggregates the pieces of information of the RRC level which includes the Message Identifier and the Serial Number among the information elements of the received Write-Replace Warning Request to the PWS System Information.

The PWS message processing unit 14 adds the Message Identifier and the Serial Number to the processed PWS message. The PWS message processing unit 14 also adds the Priority Indicator as the priority information. The Priority Indicator is the information elements indicating the priority corresponding to the Message Identifier and the Serial Number. The PWS message processing unit 14 specifies the priority corresponding to the Message Identifier and the Serial Number while referring to the priority list 16, and sets a value of the specified priority to the Priority Indicator.

As will be described later, the priority is a value that designates the priority order in which the DU 20 transmits the processed PWS message to the radio link, and is a value set in advance for each PWS message. The CU 10 sets the priority of each PWS message in advance in cooperation with an operation and maintenance (O&M) apparatus or a higher-level apparatus such as the AMF 3, and stores the priority as the priority list 16. As stated above, the priority information is used, and thus, the DU 20 may easily determine the priority as will be described later.

For example, the PWS message processing unit 14 may not add the priority information to the PWS Cancel Request.

The CU 10 negotiates the setting of the priority information in advance with the DU 20. For example, the CU 10 and the DU 20 share a method relating to the set value of the Priority Indicator in advance. For example, the DU 20 designates a method of setting the priority to be notified to the DU to 5 stages, or designates a method of setting the PWS message with a low priority not to be notified. In this case, for example, the CU 10 stores the priority list 16 for each method, and adds the priority information by using the priority list 16 corresponding to the method designated by the DU 20.

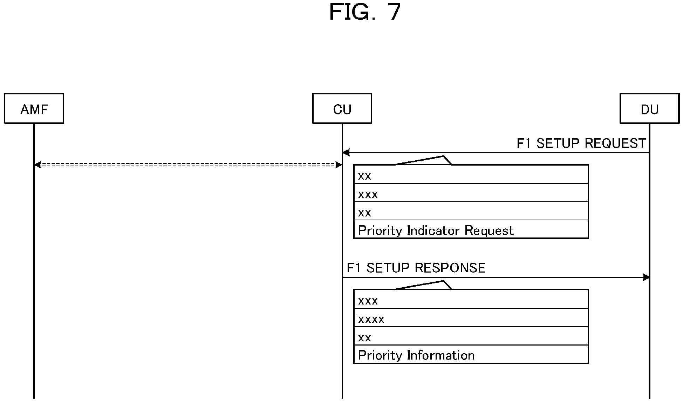

FIG. 7 is a diagram for describing a specific example of an operation of the gNB 4 in the embodiment. FIG. 7 illustrates a case where the CU 10 and the DU 20 negotiate the setting of the priority information by using an F1 Setup Procedure. As illustrated in FIG. 7, the DU 20 adds a Priority Indicator Request to an F1 Setup Request. The Priority Indicator Request is, for example, an information element for designating the above method.

The CU 10 adds the Priority Information to an F1 Setup Response to be returned to the DU 20. The Priority Information is an information element indicating a response to the Priority Indicator Request, and for example, information indicating the decided method is set.

After the F1 Setup Request is received from the DU 20, the CU 10 may set the priority of each PWS message in cooperation with the O&M apparatus or the higher-level apparatus. For example, the CU 10 creates the priority list 16 corresponding to the method designated by the DU 20.

The negotiation on the setting of the priority information between the CU 10 and the DU 20 is not limited to a case of using the F1 Setup Procedure. For example, the negotiation of the setting of the priority information may be performed or changed by using a GNB-DU Configuration Update Procedure between the CU 10 and the DU 20. In this case, the DU 20 adds the Priority Indicator Request to a GNB-DU Configuration Update. The CU 10 adds the Priority Information to a GNB-DU Configuration Acknowledge to be returned to the DU 20. After the GNB-DU Configuration Update is received from the DU 20, the CU 10 may set the priority of each PWS message in cooperation with the O&M apparatus or the higher-level apparatus.

Alternatively, the negotiation of the setting of the priority information may be performed or changed by using a GNB-CU Configuration Update Procedure between the CU 10 and the DU 20. In this case, the CU 10 sets the priority of each PWS message in advance in cooperation with the O&M apparatus or the higher-level apparatus. The CU 10 adds the Priority Indicator Request to a GNB-CU Configuration Update. The DU 20 adds the Priority Information to GNB-CU Configuration Acknowledge to be returned to the CU 10.

Referring back to FIG. 4, the description will be continued. The inter-CU-DU message transmission and reception unit 15 controls communication between the CU 10 and the DU 20. For example, the inter-CU-DU message transmission and reception unit 15 functions as a transmission unit. For example, the inter-CU-DU message transmission and reception unit 15 transmits the processed PWS message to which the PWS identifier is added by the PWS message processing unit 14 to the DU 20 that is another communication apparatus coupled to the radio link.

The DU 20 includes an inter-CU-DU message transmission and reception unit 21, a message determination unit 22, a CU-DU and DU-RRC message conversion unit 23, and an inter-DU-RRC message transmission and reception unit 25. The DU 20 stores an RRC transmission PWS list 26 in a memory.

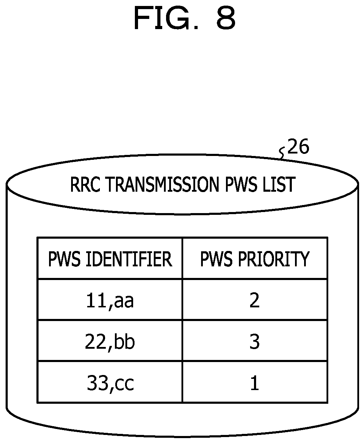

FIG. 8 illustrates an example of a data configuration of the RRC transmission PWS list 26. The RRC transmission PWS list 26 is information for managing the PWS message (Write-Replace Warning Request) being received by the DU 20, and includes the PWS identifier and the PWS priority of the Write-Replace Warning Request being received as illustrated in FIG. 8. For example, FIG. 8 illustrates that the DU 20 is receiving a message with a PWS identifier "11, aa" and a priority "2" as a target to be transmitted to the radio section.

Referring back to FIG. 4, the description will be continued. The inter-CU-DU message transmission and reception unit 21 controls communication between the CU 10 and the DU 20. For example, the inter-CU-DU message transmission and reception unit 21 functions as a reception unit. For example, the inter-CU-DU message transmission and reception unit 21 receives the processed PWS message obtained by adding the PWS identifier for identifying the PWS message to the PWS message transmitted from the higher-level network and performing the processing corresponding to the message type of the PWS message on the PWS message.

The message determination unit 22 determines the processing corresponding to the message type for each processed PWS message received from the CU 10, and delivers the processed PWS message to be transmitted to the radio link to the CU-DU and DU-RRC message conversion unit 23.

The CU-DU and DU-RRC message conversion unit 23 performs the processing corresponding to the message type on the processed PWS message received from the message determination unit 22. The CU-DU and DU-RRC message conversion unit 23 includes a PWS message processing unit 24.

The PWS message processing unit 24 functions as an identification unit. For example, the PWS message processing unit 24 identifies the processed PWS message by using the PWS identifier added to each of the plurality of processed PWS messages received from the CU 10.

For example, the PWS message processing unit 24 identifies the message to be stopped by using the PWS identifier included in the PWS Cancel Request received from the CU 10. Accordingly, for example, when the DU 20 receives the PWS Cancel Request having, as targets, a part of the plurality of different Write-Replace Warning Requests while simultaneously receiving the plurality of different Write-Replace Warning Requests, the DU 20 specifies the message to be stopped, and may stop the transmission of the message to the radio section (see FIG. 3(d)).

The PWS message processing unit 24 performs the duplication determination for controlling the duplicate processed PWS messages among the plurality of received processed PWS messages. For example, the PWS message processing unit 24 determines that the messages of which the PWS identifiers coincide with each other among the plurality of received Write-Replace Warning Requests are duplicated while referring to the RRC transmission PWS list 26. The DU 20 may suppress the transmission of the unnecessary message to the radio section by stopping the transmission of the second and subsequent identical Write-Replace Warning Requests to the radio section.

The PWS message processing unit 24 further performs priority determination processing of controlling the priority order in which the DU transmits the message by using the radio link by using predetermined priority information for each PWS message which is added to the processed PWS message and indicates the priority order in which the DU transmits the message by using the radio link. For example, the PWS message processing unit 24 transmits the messages to the radio section in descending order of priority in a range in which there is an available resource in the radio section by using the value of the Priority Indicator added to each of the plurality of received Write-Replace Warning Requests.

For example, the PWS message processing unit 24 transmits, to the radio section, the messages in descending order of priority among the Write-Replace Warning Requests being received as a target to be transmitted to the radio section while referring to the RRC transmission PWS list 26. When there is no available resource in the radio section, the transmission of a low-priority message is stopped. Accordingly, the DU 20 determines the priority of the PWS message with simple processing, and may reliably transmit the high-priority message to the radio section even when there are a few resources in the radio section.

The PWS message processing unit 24 adds the Message Identifier and the Serial Number to the PWS message to be transmitted to the CU 10. For example, the PWS message processing unit 24 adds the same Message Identifier and Serial Number as the Message Identifier and Serial Number of the PWS message such as the PWS Cancel Request received from the CU 10 to the PWS message as the response such as the PWS Cancel Response to be returned to the CU 10. At this time, the PWS message processing unit 24 may add the Priority Indicator with no change. Neither the Message Identifier, the Serial Number, nor the Priority Indicator may be added to the PWS message indicating a state of a cell such as the PWS Restart Indication.

Referring back to FIG. 4, the description will be continued. The inter-DU-RRC message transmission and reception unit 25 controls communication between the DU 20 and the UE 5. For example, the inter-DU-RRC message transmission and reception unit 25 distributes the message to the UE 5 by transmitting the PWS System Information of the Write-Replace Warning Request to the radio link.

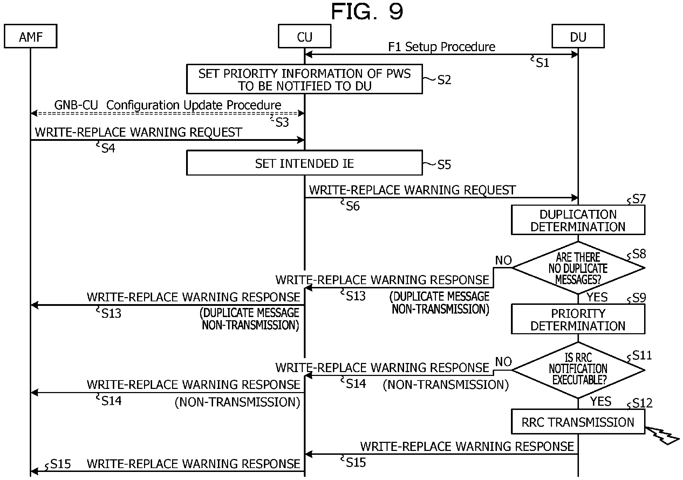

Next, an operation of the radio communication system 1 according to the present embodiment will be described. FIG. 9 is a sequence diagram for describing an example of the operation of the radio communication system 1 according to the embodiment.

First, the CU 10 and the DU 20 negotiate the setting of the priority information by using the F1 Setup Procedure (step S1). The CU 10 creates the priority list 16 for setting the priority information of the PWS to be notified to the DU 20 according to the negotiation (step S2). When the negotiation of the setting of the priority information is changed, the CU 10 uses, for example, the GNB-CU Configuration Update Procedure (step S3).

In the CU 10, when the Write-Replace Warning Request is received from the AMF 3 (step S4), the PWS message processing unit 14 sets an intended information element (IE) (step S5). For example, the PWS message processing unit 14 adds the Message Identifier and the Serial Number to the Write-Replace Warning Request processed by the AMF-CU and CU-DU message conversion unit 13. The PWS message processing unit 14 adds the Priority Indicator as the priority information by using the priority list 16. The inter-CU-DU message transmission and reception unit 15 transmits, to the DU 20, the processed Write-Replace Warning Request to which the intended information element is added (step S6).

In the DU 20, the PWS message processing unit 24 identifies the Write-Replace Warning Request by using the Message Identifier and the Serial Number added to each of the plurality of processed Write-Replace Warning Requests received from the CU 10. First, the PWS message processing unit 24 performs the duplication determination for determining that there are the duplicate messages among the plurality of received processed Write-Replace Warning Requests (step S7).

When it is determined that there are the duplicate messages as a result of the duplication determination (No in step S8), the PWS message processing unit 24 advances the processing to step S13. In the processing of step S13, the PWS message processing unit 24 returns the Write-Replace Warning Response indicating that the message is not transmitted to the radio section due to the duplication to the CU 10 and the AMF 3 via the inter-CU-DU message transmission and reception unit 21 and the CU 10.

On the other hand, when it is determined that there are no duplicate messages as the result of the duplication determination (Yes in step S8), the PWS message processing unit 24 performs the priority determination by using the Priority Indicator added to each of the plurality of received processed Write-Replace Warning Requests (step S9).

When the transmission (RRC notification) of the message to the radio section is not executable as a result of the priority determination (No in step S11), the PWS message processing unit 24 advances the processing to step S14. In the processing of step S14, the PWS message processing unit 24 returns the Write-Replace Warning Response indicating that the message is not transmitted to the radio section due to the low priority to the CU 10 and the AMF 3 via the inter-CU-DU message transmission and reception unit 21 and the CU 10.

On the other hand, when the transmission of the message to the radio section is executable as the result of the priority determination (Yes in step S11), the inter-DU-RRC message transmission and reception unit 25 transmits the PWS System Information of the Write-Replace Warning Request to the radio link (RRC transmission, step S12). The PWS message processing unit 24 advances the processing to step S15. In the processing of step S15, the PWS message processing unit returns the Write-Replace Warning Response indicating that the transmission of the message to the radio section is completed to the CU 10 and the AMF 3 via the inter-CU-DU message transmission and reception unit 21 and the CU 10.

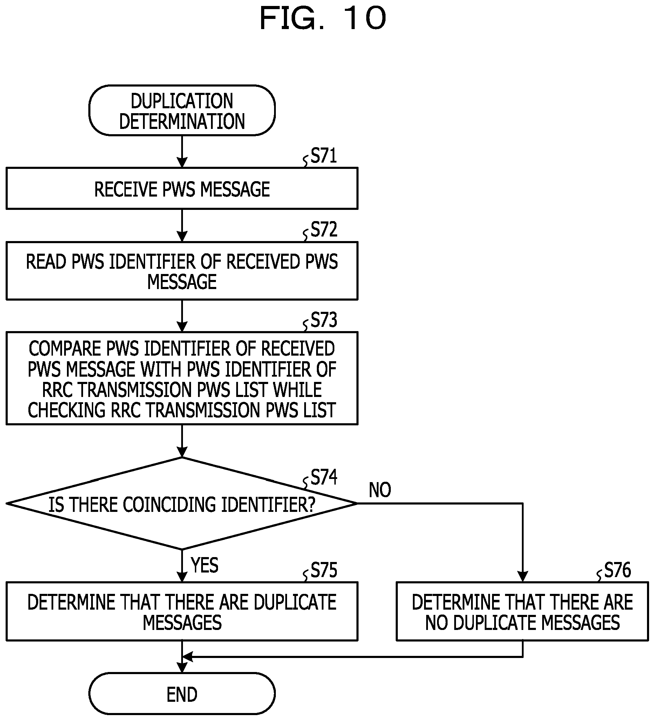

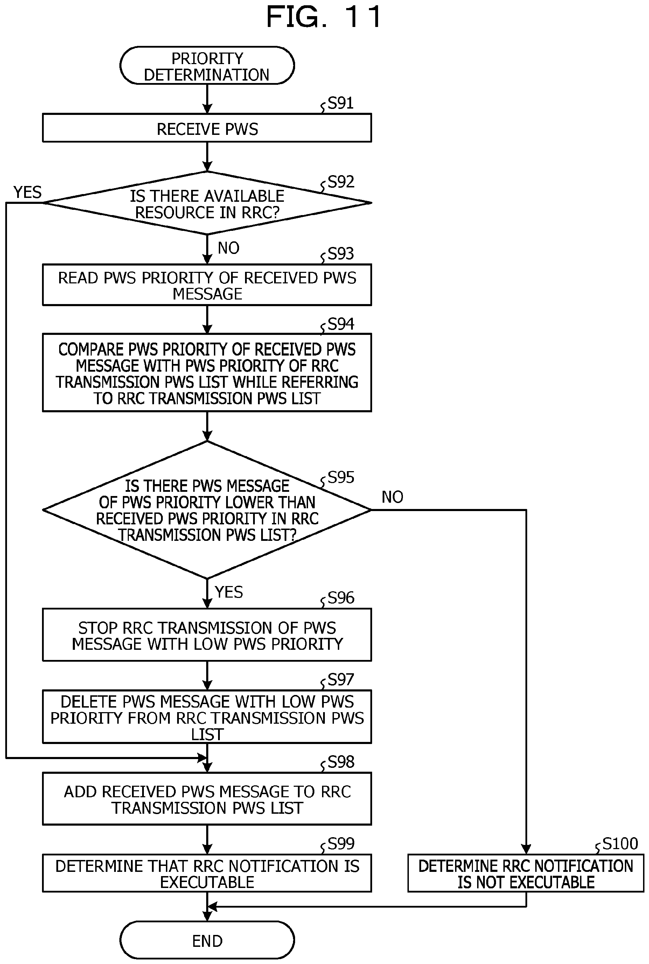

Next, FIGs. 10 and 11 are flowcharts for describing an example of an operation of the DU 20. First, FIG. 10 illustrates a processing procedure of the duplication determination of step S7 described above. The inter-CU-DU message transmission and reception unit 21 receives, from the CU 10, the processed PWS message to which the PWS identifier and the priority information are added by the CU 10 and on which the processing corresponding to the message type is performed (step S71).

The PWS message processing unit 24 reads the PWS identifier added to the received processed PWS message (step S72). The PWS message processing unit 24 checks whether or not there is the PWS identifier coinciding with the read PWS identifier while referring to the RRC transmission PWS list 26 (steps S73 to S74).

When there is the PWS identifier coinciding with the read PWS identifier in the RRC transmission PWS list 26 (Yes in step S74), the PWS message processing unit 24 determines that there are the duplicate messages (step S75). On the other hand, when there is no PWS identifier coinciding with the read PWS identifier in the RRC transmission PWS list 26 (No in step S74), the PWS message processing unit 24 determines that there are no duplicate messages (step S76).

FIG. 11 illustrates a processing procedure of the priority determination of step S9 described above. First, when the PWS message to be processed is received (step S91), the PWS message processing unit 24 checks whether or not there is the available resource in the radio section (step S92). When there is no available resource in the radio section (Yes in step S92), the PWS message processing unit 24 advances the processing to step S98. On the other hand, when there is no available resource in the radio section (No in step S92), the PWS message processing unit advances the processing to step S93.

In the processing of step S93, the PWS message processing unit 24 reads the PWS priority from the Priority Indicator added to the received PWS message processed by the CU 10. The PWS message processing unit 24 checks whether or not there is the PWS message with the PWS priority lower than the read PWS priority while referring to the RRC transmission PWS list 26 (steps S94 to S95).

When there is no PWS message with the PWS priority lower than the read PWS priority (No in step S95), the PWS message processing unit 24 determines that the transmission (RRC notification) of the message to the radio section is not executable (step S100).

On the other hand, when there is the PWS message with the PWS priority lower than the read PWS priority (Yes in step S95), the PWS message processing unit 24 stops the transmission (RRC transmission) of the PWS message with the PWS priority lower than the read PWS priority to the radio section (step S96). The PWS message processing unit 24 deletes the PWS message with the PWS priority lower than the read PWS priority from the RRC transmission PWS list 26 (step S97).

The PWS message processing unit 24 adds the received PWS message processed by the CU 10 to the RRC transmission PWS list 26 (step S98), and determines that the transmission (RRC notification) of the message to the radio section is executable (step S99).

As described above, according to the present embodiment, the CU 10 adds the PWS identifier for identifying the PWS message to the processed PWS message obtained by performing the processing corresponding to the message type of the PWS message on the PWS message received from the higher-level network. The CU 10 transmits the processed PWS message to which the PWS identifier is added to the DU 20.

In this case, the DU 20 may receive the processed PWS message obtained by adding the PWS identifier for identifying the PWS message to the PWS message transmitted from the higher-level network and performing the processing corresponding to the message type of the PWS message. The DU 20 may identify the processed PWS message by using the PWS identifier added to each of the plurality of received processed PWS messages.

Accordingly, for example, when the gNB 4 receives the PWS Cancel Request for giving the instruction to stop a part of the plurality of Write-Replace Warning Requests while receiving the plurality of Write-Replace Warning Requests, the DU 20 may specify the PWS message to be stopped. As stated above, the DU 20 that does not have a function of reading the information on the RRC level identifies the plurality of PWS messages, and may perform the processing.

The DU 20 may control the duplicate processed PWS messages among the plurality of received processed PWS messages. Accordingly, for example, the DU 20 performs the duplication determination of the plurality of received Write-Replace Warning Requests, and may suppress the transmission of the unnecessary message to the radio section.

According to the present embodiment, the CU 10 further adds, to the processed PWS message, the predetermined priority information for each PWS message which indicates the priority order in which the DU 20 transmits the message by using the radio link. In this case, the DU 20 controls the priority order in which the DU transmits the message by using the radio link by using the priority information added to the processed PWS message.

Accordingly, for example, the DU 20 may easily determine the priorities of the plurality of received Write-Replace Warning Requests without using the PWS identifier or cooperating with the O&M apparatus or the higher-level apparatus. As a result, the DU 20 may reliably transmit the high-priority message according to the resource of the radio section.

### [Hardware Configuration]

The CU 10 and the DU 20 in the above-described embodiment may be achieved by, for example, the following hardware configuration. FIG. 13 illustrates a hardware configuration example of the CU 10 and the DU 20. As illustrated in FIG. 13, the CU 10 includes a processor 10a, a memory 10b, and a transfer path interface (IF) 10c. The processor 10a includes, for example, a central processing unit (CPU), a field-programmable gate array (FPGA), a digital signal processor (DSP), and the like. The memory 10b includes a random-access memory (RAM) such as, for example, a synchronous dynamic random-access memory (SDRAM), a read-only memory (ROM), and a flash memory. The transfer path IF 10c is a circuit that communicates with other apparatuses such as the AMF 3 and the DU 20. The inter-AMF-CU message transmission and reception unit 11, the message determination unit 12, the AMF-CU and CU-DU message conversion unit 13, the PWS message processing unit 14, and the inter-CU-DU message transmission and reception unit 15 are achieved by, for example, the processor 10a.

The DU 20 includes a processor 20a, a memory 20b, a transfer path interface (IF) 20c, and a radio transfer IF 20d. The processor 20a includes, for example, a central processing unit (CPU), a field programmable gate array (FPGA), a digital signal processor (DSP), and the like. The memory 20b includes a RAM such as, for example, a synchronous dynamic random-access memory (SDRAM), a read-only memory (ROM), and a flash memory. The transfer path IF 20c is a circuit that communicates with another apparatus such as the CU 10. The radio transfer IF 20d is a circuit that performs radio communication with the UE 5 via an antenna. The inter-CU-DU message transmission and reception unit 21, the message determination unit 22, the CU-DU and DU-RRC message conversion unit 23, the PWS message processing unit 24, and the inter-DU-RRC message transmission and reception unit 25 are achieved by, for example, the processor 20a.

### Reference Signs List

1 Radio communication system
2 CBC
3 AMF
4 gNB
5 UE
10 CU
11 Inter-AMF-CU message transmission and reception unit
12 Message determination unit
13 AMF-CU and CU-DU message conversion unit
14 PWS message processing unit
15 Inter-CU-DU message transmission and reception unit
16 Priority list
20 DU
21 Inter-CU-DU message transmission and reception unit
22 Message determination unit
23 CU-DU and DU-RRC message conversion unit
24 PWS message processing unit
25 Inter-DU-RRC message transmission and reception unit
26 RRC transmission PWS list

### Citation List

### Patent Literature

PTL 1: International Publication Pamphlet No. WO 2015/186291
PTL 2: Japanese Laid-open Patent Publication No. 2012-165197
PTL 3: Japanese Laid-open Patent Publication No. 2004-274693

### Non Patent Literature

NPL 1: 3GPP TR 38.801 V14.0.0 (2017-03)
NPL 2: 3GPP TDoc R3-183486 (2018-05)

## Claims

1. A first communication apparatus, said first communication apparatus being a central unit (10), CU, of a base station (4) of a fifth generation, 5G, communication system, said first communication apparatus comprising:
a memory storing a priority list (16) indicating a correspondence between identification information of Public Warning System, PWS, messages and respective priority information;
a reception unit (11) configured to receive a PWS message from an access and mobility management function (3), AMF;
a processing unit (13) configured to perform, on the PWS message, processing corresponding to a type of the PWS message in order to obtain a processed PWS message;
an addition unit (14) configured to add, to the processed PWS message, identification information for identifying the PWS message, wherein the addition unit is configured to further add, to the processed PWS message, priority information by using the priority list (16); and
a transmission unit (15) configured to transmit the processed PWS message comprising the identification information and the priority information to a second communication apparatus coupled to a radio link, said second communication apparatus being a distributed unit (20), DU, of the base station.

2. A second communication apparatus, said second communication apparatus being a distributed unit (20), DU, of a base station (4) of a fifth generation, 5G, communication system, said second communication apparatus comprising:
a reception unit (21) configured to receive a plurality of processed Public Warning System, PWS, messages obtained each by adding, to a respective PWS message, identification information of the PWS message and priority information of the PWS message and by performing processing corresponding to a type of the PWS message;
an identification unit (24) configured to identify the plurality of processed PWS messages by using the identification information added to each of the plurality of processed PWS messages; and
a transmission unit (25) configured to transmit, to a user equipment (5), UE, by using a radio link, the plurality of processed PWS messages in descending order of priority by using the priority information added to each of the plurality of processed PWS messages.

3. The communication apparatus according to claim 2, wherein the identification unit (24) is configured to, when determining that there is a duplicate processed PWS message among the plurality of processed PWS messages, suppress the transmission of the duplicate processed PWS message to the radio link.

4. A radio communication system (1), comprising a first communication apparatus (10) according to claim 1 and a second communication apparatus (20) according to claim 2.

## Patentansprüche

1. Erstes Kommunikationsgerät, wobei die erste Kommunikationsvorrichtung eine Zentraleinheit (10), CU, einer Basisstation (4) eines Kommunikationssystems der fünften Generation, 5G, ist, wobei das erste Kommunikationsgerät umfasst:
einen Speicher, der eine Prioritätsliste (16) speichert, die eine Entsprechung zwischen Identifikationsinformationen von Public-Warning-System, PWS,-Nachrichten und entsprechenden Prioritätsinformationen anzeigt;
eine Empfangseinheit (11), die so konfiguriert ist, dass sie eine PWS-Nachricht von einer Zugangs- und Mobilitätsmanagementfunktion (3), AMF, empfängt;
eine Verarbeitungseinheit (13), die dazu konfiguriert ist, an der PWS-Nachricht eine Verarbeitung entsprechend einem Typ der PWS-Nachricht durchzuführen, um eine verarbeitete PWS-Nachricht zu erhalten;
eine Zusatzeinheit (14), die dazu konfiguriert ist, der verarbeiteten PWS-Nachricht Identifikationsinformationen zum Identifizieren der PWS-Nachricht hinzuzufügen, wobei die Zusatzeinheit dazu konfiguriert ist, der verarbeiteten PWS-Nachricht ferner Prioritätsinformationen unter Verwendung der Prioritätsliste (16) hinzuzufügen; und
eine Übertragungseinheit (15), die dazu konfiguriert ist, die verarbeitete PWS-Nachricht, die die Identifikationsinformationen und die Prioritätsinformationen umfasst, an eine zweite Kommunikationsvorrichtung zu übertragen, die mit einer Funkverbindung gekoppelt ist, wobei die zweite Kommunikationsvorrichtung eine verteilte Einheit (20), DU, der Basisstation ist.

2. Zweites Kommunikationsgerät, wobei die zweite Kommunikationsvorrichtung eine verteilte Einheit (20), DU, einer Basisstation (4) eines Kommunikationssystems der fünften Generation, 5G, ist, wobei das zweite Kommunikationsgerät umfasst:
eine Empfangseinheit (21), die dazu konfiguriert ist, eine Vielzahl von verarbeiteten Public-Warning-System, PWS,-Nachrichten zu empfangen, die jeweils durch Hinzufügen von Identifikationsinformationen der PWS-Nachricht und Prioritätsinformationen der PWS-Nachricht zu einer jeweiligen PWS-Nachricht und durch Durchführen einer Verarbeitung entsprechend einem Typ der PWS-Nachricht erhalten werden;
eine Identifikationseinheit (24), die dazu konfiguriert ist, die Vielzahl der verarbeiteten PWS-Nachrichten unter Verwendung der Identifikationsinformationen zu identifizieren, die jeder der Vielzahl der verarbeiteten PWS-Nachrichten hinzugefügt wurde; und
eine Übertragungseinheit (25), die dazu konfiguriert ist, die Vielzahl von verarbeiteten PWS-Nachrichten in absteigender Prioritätsreihenfolge unter Verwendung der Prioritätsinformationen, die jeder der Vielzahl von verarbeiteten PWS-Nachrichten hinzugefügt wurden, an ein Benutzergerät (5), UE, zu übertragen, indem eine Funkverbindung verwendet wird.

3. Kommunikationsgerät nach Anspruch 2, wobei die Identifikationseinheit (24) dazu konfiguriert ist, wenn bestimmt wird, dass es eine doppelte verarbeitete PWS-Nachricht unter der Vielzahl von verarbeiteten PWS-Nachrichten gibt, die Übertragung der doppelten verarbeiteten PWS-Nachricht an die Funkverbindung zu unterdrücken.

4. Funkkommunikationssystem (1), umfassend ein erstes Kommunikationsgerät (10) nach Anspruch 1 und ein zweites Kommunikationsgerät (20) nach Anspruch 2.

## Revendications

1. Premier appareil de communication, ledit premier appareil de communication étant une unité centrale (10), CU, d'une station de base (4) d'un système de communication de cinquième génération, 5G, ledit premier appareil de communication comprenant :
une mémoire stockant une liste de priorités (16) indiquant une correspondance entre des informations d'identification de messages de système d'alerte public, PWS, et des informations de priorité respectives ;
une unité de réception (11) configurée pour recevoir un message PWS à partir d'une fonction de gestion d'accès et de mobilité (3), AMF ;
une unité de traitement (13) configurée pour effectuer, sur le message PWS, un traitement correspondant à un type du message PWS afin d'obtenir un message PWS traité ;
une unité d'addition (14) configurée pour ajouter, au message PWS traité, des informations d'identification pour identifier le message PWS, dans lequel l'unité d'addition est configurée pour ajouter en outre, au message PWS traité, des informations de priorité en utilisant la liste de priorités (16) ; et
une unité de transmission (15) configurée pour transmettre le message PWS traité comprenant les informations d'identification et les informations de priorité à un second appareil de communication couplé à une liaison radio, ledit second appareil de communication étant une unité distribuée (20), DU, de la station de base.

2. Second appareil de communication, ledit second appareil de communication étant une unité distribuée (20), DU, d'une station de base (4) d'un système de communication de cinquième génération, 5G, ledit second appareil de communication comprenant :
une unité de réception (21) configurée pour recevoir une pluralité de messages de système d'avertissement public, PWS, traités, obtenus chacun en ajoutant, à un message PWS respectif, des informations d'identification du message PWS et des informations de priorité du message PWS et en effectuant un traitement correspondant à un type du message PWS ;
une unité d'identification (24) configurée pour identifier la pluralité de messages PWS traités en utilisant les informations d'identification ajoutées à chacun de la pluralité de messages PWS traités ; et
une unité de transmission (25) configurée pour transmettre, à un équipement utilisateur (5), UE, à l'aide d'une liaison radio, la pluralité de messages PWS traités dans l'ordre de priorité décroissant à l'aide des informations de priorité ajoutées à chacun de la pluralité de messages PWS traités.

3. Appareil de communication selon la revendication 2, dans lequel l'unité d'identification (24) est configurée pour, lorsqu'il est déterminé qu'il existe un message PWS traité dupliqué parmi la pluralité de messages PWS traités, supprimer la transmission du message PWS traité dupliqué vers la liaison radio.

4. Système de radiocommunication (1), comprenant un premier appareil de communication (10) selon la revendication 1 et un second appareil de communication (20) selon la revendication 2.
